# EUROPÄISCHE PATENTSCHRIFT

(11) **EP 2 486 271 B1**
(45) Veröffentlichungstag und Bekanntmachung des Hinweises auf die Patenterteilung: **08.04.2015**
(21) Anmeldenummer: 10766001.1
(22) Anmeldetag: 03.10.2010
(51) Int. Cl.: F03D 7/02

(54) **ROTOR FÜR EINE WINDENERGIEANLAGE**
ROTOR FOR A WIND POWER PLANT
ROTOR POUR ÉOLIENNE

(30) Priorität: 07.10.2009 DE 102009045467
(43) Veröffentlichungstag der Anmeldung: 15.08.2012
(73) Patentinhaber: SSB Wind Systems GmbH & Co. KG, 48499 Salzbergen (DE)
(72) Erfinder: BERTOLOTTI, Fabio, 48455 Bad Bentheim (DE)
(86) Internationale Anmeldenummer: PCT/EP2010/064699
(87) Internationale Veröffentlichungsnummer: WO 2011/042375

(56) Entgegenhaltungen:
- WO-A1-2008/068373
- DE-A1- 19 948 997
- GB-A- 2 159 584

## Beschreibung

Die Erfindung betrifft einen Rotor für eine Windenergieanlage, mit einer Rotornabe, wenigstens einem an der Rotornabe um eine Blattachse drehbar gelagerten Rotorblatt, wenigstens einem Gewindespindel-Mechanismus, der zwischen die Rotornabe und das Rotorblatt geschaltet und sowohl mit der Rotornabe als auch mit dem Rotorblatt verbunden ist, wobei das Rotorblatt durch Betätigen des Gewindespindel-Mechanismus relativ zu der Rotornabe um die Blattachse gedreht wird oder werden kann.

Die WO 2008/068373 A1 offenbart einen Rotor für eine Windenergieanlage, mit einer Rotornabe, an der Rotornabe um eine Blattachse drehbar gelagerten Rotorblättern, einem Gewindespindel-Mechanismus je Rotorblatt, der zwischen die Rotornabe und das Rotorblatt geschaltet und sowohl mit der Rotornabe als auch mit dem Rotorblatt verbunden ist, welches durch Betätigen des Gewindespindel-Mechanismus relativ zu der Rotornabe um die Blattachse gedreht wird.

Die DE 10 2005 051 912 A1 offenbart eine Anordnung zum Lagern wenigstens dreier Rotorblätter, umfassend eine Rotorblattlagerung zum Verschwenken der Rotorblätter um deren jeweilige Hauptachse, die so ausgebildet ist, dass die Hauptachse eines der Rotorblätter mit den Hauptachsen der beiden anderen jeweils eine Kreuzungsstelle aufweist, wobei die beiden Kreuzungsstellen zueinander beabstandet sind. Das Rotorblatt ist in einem Bereich der Rotorblattlagerung zum Verdrehen des Rotorblatts mit Mitteln ausgebildet, an die Übertragungsmittel zum Eingreifen vorgesehen sind, die von Antriebsmitteln antreibbar sind, die einen Gewindetrieb oder einen Kugelgewindetrieb umfassen.

Die DE 199 48 997 A1 beschreibt eine Blatteinzelverstellung für Windenergieanlagen, umfassend zwei an wenigstens zwei zueinander bewegliche Abschnitte einer im Wesentlichen in der Schnittebene des Blattanschlusses angeordneten Schwinge angesetzte, eine Linearauslängung erzeugende Antriebe, wobei je ein Ende der Schwinge über je eine Schwenkverbindung mit einer kraftübermittelnden Anlenkung zur Nabe und einem Element an dem zu verstellenden Blatt versehen ist. Der Linearantrieb mit geringerem Hub ist z.B. als Elektrospindelantrieb ausgebildet.

In der US 5 584 655 wird eine Windenergieanlage mit einem Rotorblatt beschrieben, welches um seine Längsachse drehbar an einer Rotornabe gelagert ist. Der Verdrehwinkel des Rotorblatts kann mit einem Hydraulikzylinder eingestellt werden, der einerseits an der Rotornabe und andererseits an dem Rotorblatt mittels eines Hebels angelenkt ist. Anstelle des Hydraulikzylinders kann auch ein Gewindespindel-Mechanismus, ein Linearmotor etc. verwendet werden.

Gewindespindel-Mechanismen, die in Blattwinkelverstellantrieben von Rotoren von Windkraftanlagen eingesetzt werden, unterliegen einem nicht unerheblichen Verschleiß und müssen daher häufiger ausgetauscht werden, was mit Materialkosten, Montagekosten und mit Kosten für den Anlagenstillstand verbunden ist.

Ausgehend hiervon liegt der Erfindung die Aufgabe zugrunde, bei einem Rotor der eingangs genannten Art die mit dem Verschleiß des wenigstens einen Gewindespindel-Mechanismus verbundenen Kosten reduzieren zu können.

Diese Aufgabe wird erfindungsgemäß durch einen Rotor nach Anspruch 1 gelöst. Bevorzugte Weiterbildungen der Erfindung sind in den Unteransprüchen gegeben.

Der erfindungsgemäße Rotor für eine Windenergieanlage weist eine Rotornabe, wenigstens ein an der Rotornabe um eine Blattachse drehbar gelagertes Rotorblatt und wenigstens einen Gewindespindel-Mechanismus auf, der zwischen die Rotornabe und das Rotorblatt geschaltet und sowohl mit der Rotornabe als auch mit dem Rotorblatt verbunden ist, wobei das Rotorblatt durch Betätigen des Gewindespindel-Mechanismus relativ zu der Rotornabe um die Blattachse gedreht wird oder werden kann, und wobei der Gewindespindel-Mechanismus einen Antrieb, ein Betätigungsglied, eine lösbar mit dem Betätigungsglied gekoppelte Spindelmutter und eine mittels des Antriebs um ihre Längsachse drehbare Gewindespindel aufweist, die lösbar mit dem Antrieb gekoppelt ist, sodass die Gewindespindel und die Spindelmutter von dem Gewindespindel-Mechanismus trennbar sind.

Es hat sich herausgestellt, dass bei einem als Blattwinkelverstellantrieb genutzten Gewindespindel-Mechanismus der Verschleiß hauptsächlich an der Gewindespindel und an der Spindelmutter auftritt. Durch die erfindungsgemäße Ausgestaltung des Rotors ist die Gewindespindel zusammen mit der Spindelmutter austauschbar, ohne den gesamten Gewindespindel-Mechanismus demontieren und/oder austauschen zu müssen. Hierdurch können Montagekosten eingespart werden. Ferner können Materialkosten eingespart werden, da andere Komponenten des Gewindespindel-Mechanismus, wie z.B. der Antrieb, weiterbenutzt werden können.

Die Gewindespindel und die Spindelmutter bilden eine Baugruppe, die insbesondere zwischen den Antrieb und das Betätigungsglied geschaltet ist. Bevorzugt ist die Gewindespindel zusammen mit der Spindelmutter, also bevorzugt die Baugruppe als Ganzes, von dem Gewindespindel-Mechanismus trennbar. Die Gewindespindel ist mit der Spindelmutter insbesondere schraubverbunden. Bevorzugt ist die Spindelmutter auf die Gewindespindel aufgeschraubt bzw. die Gewindespindel in die Spindelmutter eingeschraubt.

Gemäß einer Weiterbildung der Erfindung ist die Gewindespindel außerhalb des Antriebs angeordnet. Somit kann als Antrieb ein herkömmlicher Elektromotor verwendet werden, sodass die Kosten für den Gewindespindel-Mechanismus vergleichsweise gering gehalten werden können. Unter dem Merkmal, dass die Gewindespindel außerhalb des Antriebs angeordnet ist, soll insbesondere verstanden werden, dass der Antrieb und die Gewindespindel separat und/oder räumlich getrennt voneinander angeordnet sind. Dies schließt aber nicht aus, dass die Gewindespindel und der Antrieb vorzugsweise eine enge räumliche Nähe zueinander aufweisen. Der Antrieb umfasst insbesondere eine Antriebswelle, mittels welcher die Gewindespindel um ihre Längsachse drehbar ist.

Die Gewindespindel ist bevorzugt lösbar an einer Welle befestigt, die mittels des Antriebs um die Längsachse drehbar ist. Insbesondere ist die Gewindespindel durch wenigstens ein Befestigungsmittel lösbar an der Welle befestigt. Das Befestigungsmittel ist oder umfasst z.B. wenigstens eine Schraube, wenigstens einen Schraubbolzen und/oder wenigstens einen Befestigungsbolzen. Gemäß einer Ausgestaltung der Erfindung weisen die Welle und die Gewindespindel jeweils einen Flansch auf, wobei die beiden Flansche lösbar aneinander befestigt sind, insbesondere durch das wenigstens eine Befestigungsmittel. Die Flansche sind vorzugsweise kreis- oder ringförmig und/oder zylinderförmig. In jedem der Flansche ist bevorzugt wenigstens ein Loch vorgesehen, welches zu einem Loch in dem jeweils anderen Flansch fluchtet, wobei in die zueinander fluchtenden Löcher das oder eines der Befestigungsmittel eingreift. Die Flansche sind durch das wenigstens eine Befestigungsmittel vorzugsweise formschlüssig miteinander verbunden. Insbesondere sind die Flansche durch das wenigstens eine Befestigungsmittel miteinander verschraubt. Wegen der lösbaren Befestigung kann die Gewindespindel von der Welle und somit auch von dem Antrieb getrennt werden. Die aus der Gewindespindel und der Spindelmutter gebildete Baugruppe ist insbesondere zwischen die Welle und das Betätigungsglied geschaltet.

Die Gewindespindel kann direkt mit dem Antrieb und/oder mit der Welle gekoppelt sein. Gemäß einer ersten Variante der Erfindung ist somit die Welle die Antriebswelle des Antriebs oder zwischen die Antriebswelle des Antriebs und die Gewindespindel geschaltet. Bevorzugt weist der Gewindespindel-Mechanismus aber ein Getriebe auf, wobei die Gewindespindel und/oder die Welle unter Zwischenschaltung des Getriebes mit dem Antrieb gekoppelt sind. Gemäß einer zweiten Variante der Erfindung ist somit die Welle eine Abtriebswelle des Getriebes oder zwischen die Abtriebswelle des Getriebes und die Gewindespindel geschaltet. Im letzteren Fall ist die Abtriebswelle bevorzugt mit der Welle gekoppelt. Das Getriebe umfasst bevorzugt ein Zahnradgetriebe, ein Planetengetriebe, einen Kettentrieb und/oder einen Riementrieb oder ist als Zahnradgetriebe, Planetengetriebe, Kettentrieb und/oder Riementrieb ausgebildet.

Mittels des Antriebs ist die Gewindespindel und/oder die Welle um ihre Längsachse drehbar. Ferner ist die Antriebswelle z.B. direkt oder unter Zwischenschaltung des Getriebes und/oder der Welle mit der Gewindespindel gekoppelt. Insbesondere ist der Antrieb ein elektrischer Antrieb und umfasst bevorzugt einen oder zumindest einen Elektromotor. Die Antriebswelle ist in diesem Fall vorzugsweise die Motorwelle des Elektromotors. Bevorzugt weist der Antrieb wenigstens einen Stator und wenigstens einen relativ zu diesem drehbaren Läufer auf, der drehfest mit der Antriebswelle (Motorwelle) gekoppelt ist und vorzugsweise auf dieser sitzt. Unter dem Merkmal, dass die Gewindespindel außerhalb des Antriebs angeordnet ist, soll hier insbesondere verstanden werden, dass die Gewindespindel außerhalb der von Stator und Läufer und/oder außerhalb der von Stator, Läufer und Antriebswelle gebildeten Baugruppe angeordnet ist.

Die Rotornabe und das Rotorblatt bilden insbesondere jeweils ein Bauteil, wobei das Betätigungsglied an einem ersten der Bauteile gelagert und die Gewindespindel und/oder die Welle an einem zweiten der Bauteile gelagert ist. Gemäß einer Weiterbildung der Erfindung ist das Betätigungsglied an dem ersten Bauteil gelenkig gelagert und/oder die Gewindespindel und/oder die Welle ist an dem zweiten Bauteil gelenkig gelagert, sodass ein Verkanten des Gewindespindel-Mechanismus verhindert werden kann. Das Betätigungsglied ist an dem ersten Bauteil vorzugsweise schwenkbar und/oder drehbar gelagert. Ferner ist die Gewindespindel und/oder die Welle an dem zweiten Bauteil vorzugsweise schwenkbar und/oder drehbar gelagert. Die Gewindespindel ist insbesondere um ihre Längsachse drehbar an dem zweiten Bauteil gelagert. Die Bauteile können jeweils einteilig oder mehrteilig sein.

Bevorzugt ist die Gewindespindel und/oder die Welle mittels einer Halterung an dem zweiten Bauteil gelagert. Gemäß einer Ausgestaltung der Erfindung kann auch die Spindelmutter mittels der Halterung an dem zweiten Bauteil gelagert sein. Vorzugsweise ist das Betätigungsglied an der Halterung verschiebbar geführt.

Die Halterung umfasst oder bildet bevorzugt ein Gehäuse, in dem die Spindelmutter und die Gewindespindel angeordnet sind. Hierdurch können die Gewindespindel und die Spindelmutter vor Verunreinigungen und Feuchtigkeit geschützt werden. Das Gehäuse ist vorzugsweise mit einer Zugangsöffnung versehen, durch welche hindurch die Gewindespindel und/oder die Spindelmutter zugänglich und insbesondere auch austauschbar sind. Ferner weist das Gehäuse bevorzugt eine die Zugangsöffnung abdeckende Abdeckung auf, die vom Gehäuse abnehmbar oder relativ zu diesem bewegbar ist und somit geöffnet werden kann, sodass durch Öffnen der Abdeckung die Zugangsöffnung freigebbar ist. Im geschlossenen Zustand deckt die Abdeckung die Zugangsöffnung vorzugsweise dichtend ab. Insbesondere ist das Betätigungsglied in oder zumindest teilweise in dem Gehäuse angeordnet. Vorzugsweise erstreckt sich das Betätigungsglied aus dem Gehäuse heraus. Bevorzugt ist auch die Welle in oder zumindest teilweise in dem Gehäuse angeordnet.

Gemäß einer Ausgestaltung der Erfindung ist in das Gehäuse ein Schmiermittel eingebracht, welches insbesondere flüssig ist. Vorzugsweise kann das Schmiermittel im Gehäuseinnenraum, in dem auch die Gewindespindel angeordnet ist, frei fließen. Bei einer Drehung des Rotors um die Rotorachse dreht sich auch der Gewindespindel-Mechanismus um die Rotorachse, sodass eine automatische Schmierung der Gewindespindel und/oder des Gewindespindel-Mechanismus mit dem Schmiermittel erfolgt. Das Schmiermittel ist z.B. durch ein Öl oder dergleichen gebildet.

Die Halterung ist insbesondere gelenkig an dem zweiten Bauteil gelagert, vorzugsweise schwenkbar und/oder drehbar. Hierdurch kann die gelenkige Lagerung der Gewindespindel und/oder der Welle an dem zweiten Bauteil realisiert werden. Die gelenkige Lagerung der Halterung an dem zweiten Bauteil erfolgt z.B. um wenigstens eine Gelenkachse, die insbesondere senkrecht zur Längsachse der Gewindespindel verläuft. Gemäß einer Weiterbildung der Erfindung erfolgt die gelenkige Lagerung der Halterung an dem zweiten Bauteil um wenigstens zwei Gelenkachsen, die insbesondere senkrecht zur Längsachse der Gewindespindel und senkrecht zueinander verlaufen. Die gelenkige Lagerung des Betätigungsglieds an dem ersten Bauteil erfolgt z.B. um wenigstens eine Gelenkachse, die insbesondere senkrecht zur Längsachse der Gewindespindel verläuft. Bevorzugt erfolgt die gelenkige Lagerung des Betätigungsglieds an dem ersten Bauteil aber um wenigstens zwei Gelenkachsen, die insbesondere senkrecht zur Längsachse der Gewindespindel und senkrecht zueinander verlaufen.

Das Betätigungsglied ist insbesondere an dem Rotorblatt und die Gewindespindel und/oder die Welle und/oder die Halterung ist insbesondere an der Rotornabe gelagert, sodass das erste Bauteil von dem Rotorblatt und das zweite Bauteil von der Rotornabe gebildet ist. Es ist aber auch eine umgekehrte Anordnung möglich, sodass das zweite Bauteil von dem Rotorblatt und das erste Bauteil von der Rotornabe gebildet ist.

Ein Verkanten des Gewindespindel-Mechanismus kann zum einen in einer Querschnittsebene des Rotorblatts, zum anderen aber auch senkrecht dazu erfolgen. Bevorzugt ist das Betätigungsglied mittels wenigstens eines ersten Gelenks gelenkig an dem ersten Bauteil und/oder die Halterung mittels wenigstens eines zweiten Gelenks gelenkig an dem zweiten Bauteil gelagert, wobei jedes der Gelenke einen, zwei oder wenigstens zwei Rotationsfreiheitsgrade besitzt. Jedes der Gelenke kann z.B. ein Kreuzgelenk, ein Kugelgelenk, ein Drehgelenk oder ein Elastomerlager sein. Ferner kann das erste Gelenk unterschiedlich zu dem zweiten Gelenk ausgebildet sein.

Bevorzugt ist die Halterung mittels wenigstens eines Elastomerlagers gelenkig an dem zweiten Bauteil gelagert. Das oder jedes der Elastomerlager umfasst bevorzugt ein Innenteil, ein das Innenteil umringendes Außenteil und einen das Innenteil umgebenden und in dem Außenteil sitzenden Elastomerkörper, mittels welchem das Innenteil mit dem Außenteil verbunden ist. Der Elastomerkörper ist mit dem Innenteil z.B. stoffschlüssig, reibschlüssig oder gleitend verbunden. Ferner ist der Elastomerkörper mit dem Außenteil z.B. stoffschlüssig, reibschlüssig oder gleitend verbunden. Bevorzugt ist das Innenteil mit der Halterung und das Außenteil mit dem zweiten Bauteil fest verbunden. Insbesondere ist das Innenteil starr mit der Halterung verbunden und/oder einstückig mit dieser ausgebildet. Alternativ kann aber auch das Außenteil mit der Halterung und das Innenteil mit dem zweiten Bauteil fest verbunden sein. Das Außenteil ist bevorzugt eine Hülse. Ergänzend oder alternativ kann das Außenteil durch das zweite Bauteil oder durch die Halterung gebildet sein. Gemäß einer Weiterbildung der Erfindung ist das Betätigungsglied mittels wenigstens eines Elastomerlagers an dem ersten Bauteil gelagert. Elastomerlager sind wartungsarm und weisen eine relativ hohe Lebensdauer auf. Insbesondere bieten Elastomerlager den Vorteil, dass sie in der Regel nicht geschmiert werden müssen.

Die Gewindespindel und/oder die Welle ist bevorzugt mittels wenigstens eines Lagers um ihre Längsachse drehbar an der Halterung gelagert. Insbesondere handelt es sich bei dem wenigstens einen Lager um ein Wälzlager, alternativ kann das Lager aber auch als Gleitlager ausgebildet sein. Das Lager ist vorzugsweise an der Halterung vorgesehen. Gemäß einer Weiterbildung der Erfindung ist die Gewindespindel und/oder die Welle an dem Lager oder an einem zusätzlichen Lager in axialer Richtung gesichert oder festgelegt. Die axiale Richtung bezeichnet hierbei insbesondere die Richtung der Längsachse der Gewindespindel und/oder der Welle.

Das wenigstens eine Lager und/oder der Antrieb und/oder das Getriebe ist bevorzugt an der Halterung befestigt. Hierdurch können unerwünschte Abstandsänderungen zwischen dem Antrieb und der Gewindespindel vermieden werden. Bevorzugt ist auch das zusätzliche Lager an der Halterung befestigt, sofern dieses vorhanden ist.

Der Gewindespindel-Mechanismus weist bevorzugt einen Positionsgeber auf, mittels welchem z.B. die Verdrehung des Rotorblatts relativ zu der Rotornabe ermittelt wird oder werden kann. Insbesondere ist die Gewindespindel, vorzugsweise unter Zwischenschaltung der Welle, mit dem Positionsgeber verbunden. Es kann aber auch eine Getriebewelle oder die Antriebswelle mit dem Positionsgeber verbunden sein.

Das Betätigungsglied ist bevorzugt als Rohr oder zumindest teilweise hohl ausgebildet. Die hohle Ausbildung des Betätigungsglieds hat den Vorteil, dass die Gewindespindel in den Hohlraum des Betätigungsglieds eintauchen kann.

Gemäß einer Weiterbildung der Erfindung ist die Spindelmutter an dem Betätigungsglied mittels einer Schraubverbindung befestigt. Da die Schraubverbindung lösbar ist, kann die Spindelmutter von dem Betätigungsglied getrennt werden, sodass die Spindelmutter lösbar mit dem Betätigungsglied gekoppelt ist. Insbesondere weist das Betätigungsglied ein Innengewinde auf, welches mit einem an der Spindelmutter vorgesehenen Außengewinde ineinandergreift. Ergänzend oder alternativ können die Spindelmutter und das Betätigungsglied aber auch zusammengesteckt oder durch Schrauben oder Bolzen aneinander befestigt sein. Bevorzugt ist die Verbindung zwischen der Spindelmutter und dem Betätigungsglied durch einen Sicherungsstifts, vorzugsweise formschlüssig, gegen Lösen gesichert. Der Sicherungsstift greift z.B. in eine in der Spindelmutter vorgesehene Ausnehmung ein oder durchgreift diese Ausnehmung. Ferner greift der Sicherungsstift z.B. in eine in dem Betätigungsglied vorgesehene Ausnehmung ein oder durchgreift diese Ausnehmung.

Die Gewindespindel und die Spindelmutter bilden bevorzugt einen Rollengewindetrieb und sind entsprechend ausgebildet. Hierdurch können hohe Kräfte bei geringer Reibung übertragen werden. Ferner weisen Rollengewindetriebe eine relativ hohe Lebensdauer bei hoher Zuverlässigkeit auf. Insbesondere sind Rollengewindetriebe auch noch bei unzureichender Schmierung funktionsfähig, was zusätzliche Funktionssicherheit bietet. Vorzugsweise bilden die Gewindespindel und die Spindelmutter einen Planetenrollengewindetrieb. Derartige Gewindetriebe sind z.B. aus einem Katalog der SKF-Gruppe, Druckschrift 4351 DE- 2008-01, bekannt.

Die Rotornabe ist insbesondere um eine Rotorachse drehbar, wobei die Blattachse des Rotorblatts bevorzugt quer oder im Wesentlichen quer zur Rotorachse verläuft.

Gemäß einer Ausgestaltung der Erfindung umfasst der Rotor wenigstens einen zwischen die Rotornabe und das Rotorblatt geschalteten Blattwinkelverstellantrieb, mittels welchem das Rotorblatt um seine Blattachse drehbar ist, wobei der Blattwinkelverstellantrieb den wenigstens einen Gewindespindel-Mechanismus aufweist oder durch diesen gebildet ist. Die Gewindespindel ist durch das wenigstens eine Befestigungsmittel lösbar in dem Blattwinkelverstellantrieb befestigt, sodass die Gewindespindel und die dazugehörige Spindelmutter von dem Rest des Blattwinkelverstellantriebs getrennt werden können.

Der Rotor kann mehrere Rotorblätter aufweisen, die jeweils um eine Blattachse drehbar an der Rotornabe gelagert sind. Zwischen die Rotornabe und die Rotorblätter kann jeweils mindestens ein Gewindespindel-Mechanismus geschaltet und sowohl mit der Rotornabe als auch mit dem jeweiligen Rotorblatt verbunden sein, wobei jedes der Rotorblätter durch Betätigen des jeweiligen Gewindespindel-Mechanismus relativ zu der Rotornabe um die jeweilige Blattachse drehbar ist. Jeder der Gewindespindel-Mechanismen kann, wie beschrieben, weitergebildet sein.

Die Erfindung betrifft ferner eine Windenergieanlage mit einem Maschinenträger und einem an dem Maschinenträger um eine Rotorachse drehbar gelagerten und mittels Windkraft angetriebenen oder antreibbaren Rotor, der mit einem elektrischen Generator mechanisch gekoppelt ist, der von dem Rotor angetrieben wird oder werden kann. Bei dem Rotor handelt es sich bevorzugt um einen erfindungsgemäßen Rotor, der gemäß allen genannten Ausgestaltungen weitergebildet sein kann. Mittels des Gewindespindel-Mechanismus ist das wenigstens eine Rotorblatt relativ zur Rotornabe um seine Blattachse drehbar und dadurch die Drehzahl des Rotors, und somit vorzugsweise auch die Drehzahl des Generators, variierbar.

Die Erfindung betrifft ebenfalls die Verwendung eines Rotors zur Variation der Rotordrehzahl einer Windenergieanlage mit einem Maschinenträger, an dem der um eine Rotorachse und mittels Windkraft angetriebene Rotor drehbar gelagert und mit einem elektrischen Generator mechanisch gekoppelt ist, der von dem Rotor angetrieben wird. Bei dem Rotor handelt es sich bevorzugt um einen erfindungsgemäßen Rotor, der gemäß allen genannten Ausgestaltungen weitergebildet sein kann. Insbesondere wird durch Betätigen des Gewindespindelmechanismus das wenigstens eine Rotorblatt relativ zur Rotornabe um seine Blattachse gedreht, sodass sich die Drehzahl des Rotors, und somit vorzugsweise auch die Drehzahl des Generators, ändert.

Die Erfindung wird nachfolgend anhand bevorzugter Ausführungsformen unter Bezugnahme auf die Zeichnung beschrieben. In der Zeichnung zeigen:
- Fig. 1: eine schematische Darstellung einer Windenergieanlage mit einem erfindungsgemäßen Rotor,
- Fig. 2: eine schematische und teilweise geschnittene Draufsicht auf einen Verstellantrieb gemäß einer ersten Ausführungsform der Erfindung,
- Fig. 3: eine schematische und teilweise Seitenansicht des Verstellantriebs nach Fig. 2,
- Fig. 4: eine schematische und teilweise geschnittene Seitenansicht des Gewindespindel-Mechanismus nach Fig. 2,
- Fig. 5: eine schematische und teilweise Schnittansicht des Betätigungsglieds und der Spindelmutter nach Fig. 2 entlang der Drehachse der Gewindespindel,
- Fig. 6: die Seitenansicht nach Fig. 4 mit demontierter Gewindespindel,
- Fig. 7: eine Seitenansicht der demontierten Gewindespindel,
- Fig. 8: eine schematische Seitenansicht des Gewindespindel-Mechanismus im geschlossenen Zustand des Gehäuses,
- Fig. 9: eine schematische Seitenansicht des Gewindespindel-Mechanismus im geöffneten Zustand des Gehäuses,
- Fig. 10: eine schematische Draufsicht auf einen Verstellantrieb gemäß einer zweiten Ausführungsform der Erfindung und
- Fig. 11: eine schematische Draufsicht auf einen Verstellantrieb gemäß einer dritten Ausführungsform der Erfindung.

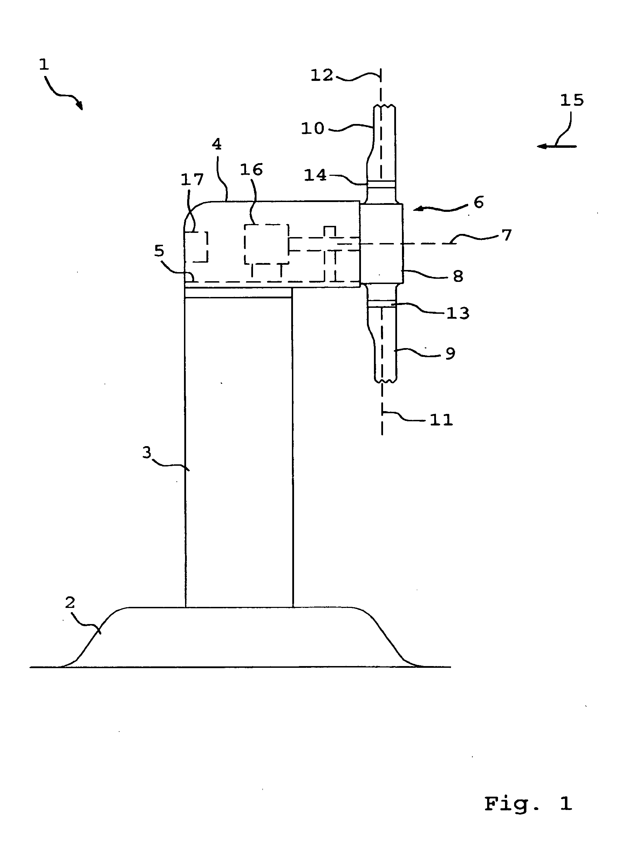

Aus Fig. 1 ist eine Windenergieanlage 1 ersichtlich, wobei ein von einem Fundament 2 aufstehender Turm 3 an seinem dem Fundament 2 abgewandten Ende mit einem Maschinenhaus 4 verbunden ist. In dem Maschinenhaus 4 ist ein Maschinenträger 5 angeordnet, an dem ein Rotor 6 um eine Rotorachse 7 drehbar gelagert ist, der eine Rotornabe 8 und damit verbundene Rotorblätter 9 und 10 aufweist, die jeweils um ihre Blattachse 11 bzw. 12 relativ zur Rotornabe 8 drehbar sind. Jedes Rotorblatt 9, 10 ist mit einem Verstellantrieb 13 bzw. 14 mechanisch gekoppelt, mittels welchem das jeweilige Rotorblatt 9, 10 um die zugehörige Blattachse 11, 12 gedreht werden kann. Der Rotor 6 wird durch Windkraft 15 um die Rotorachse 7 gedreht und ist mechanisch mit einem elektrischen Generator 16 gekoppelt, der in dem Maschinenhaus 4 angeordnet und an dem Maschinenträger 5 befestigt ist. Für den kontrollierten Betrieb der Windenergieanlage 1 ist eine Windenergieanlagensteuerung 17 vorgesehen, mittels welcher unter anderem die Verstellantriebe 13 und 14 gesteuert werden.

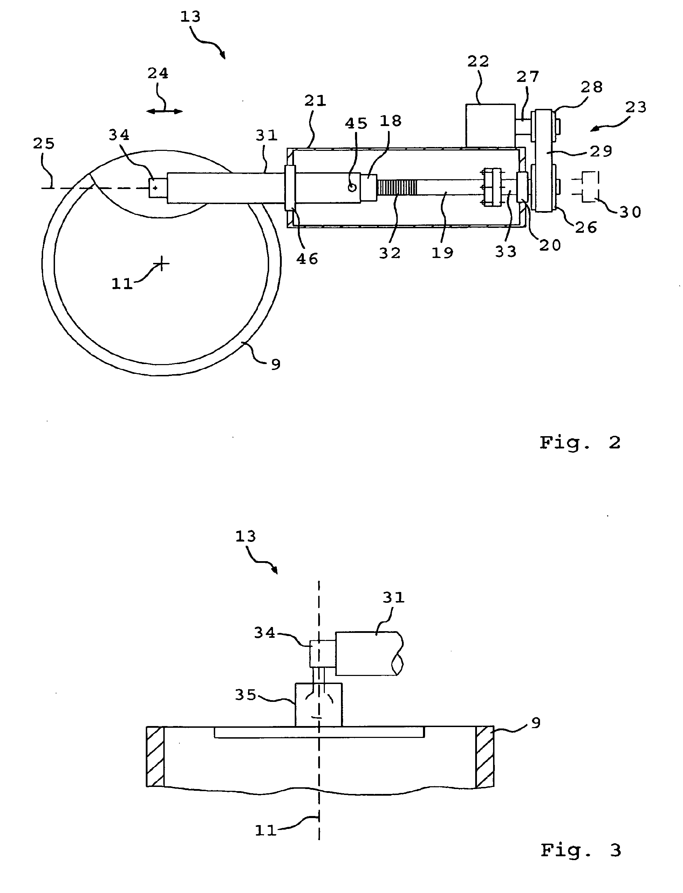

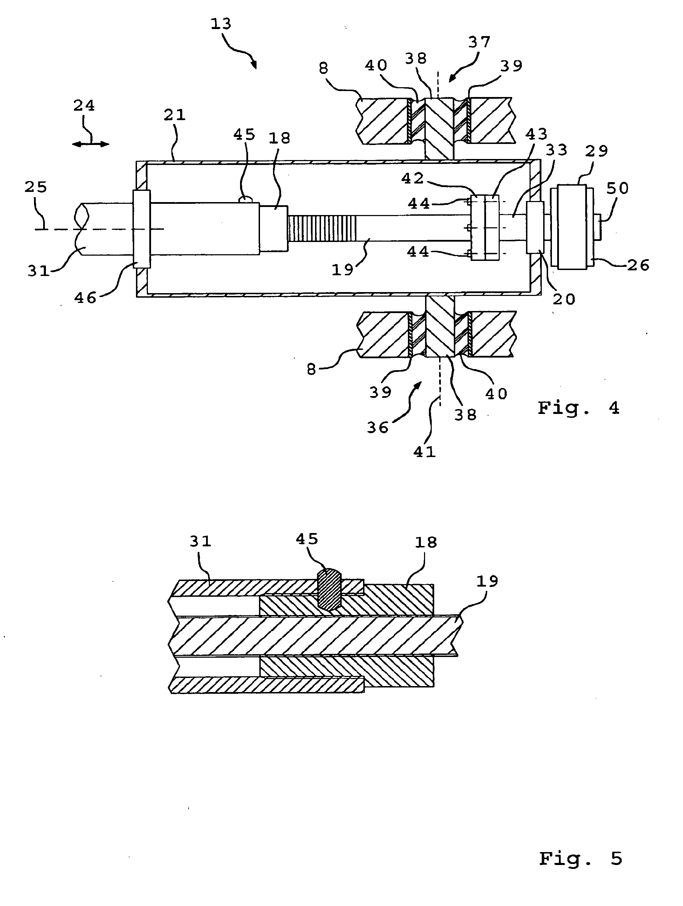

Aus Fig. 2 ist eine teilweise geschnittene Draufsicht auf den aus Fig. 1 ersichtlichen Verstellantriebs 13 gemäß einer ersten Ausführungsform der Erfindung ersichtlich, der einen Gewindespindel-Mechanismus umfasst. Der Verstellantrieb 13 weist eine Spindelmutter 18 auf, die mittels eines Betätigungsglieds 31 an dem Rotorblatt 9 angelenkt ist. In die Spindelmutter 18 ist eine ein Außengewinde 32 aufweisende Gewindespindel 19 eingeschraubt, die mit einer Welle 33 drehfest verbunden ist. Die Welle 33 ist um ihre Längsachse 25, die mit der Längsache der Gewindespindel 19 zusammenfällt, mittels eines Lagers 20 an einer als Gehäuse ausgebildeten Halterung 21 drehbar gelagert und vorzugsweise in axialer Richtung gesichert. Ein elektrischer Antrieb 22 ist an der Halterung 21 befestigt und mittels eines Getriebes 23 mit der Welle 33 gekoppelt, sodass diese mittels des Antriebs 22 um ihre Längsachse 25 gedreht wird oder werden kann. Durch die drehfeste Verbindung der Gewindespindel 19 mit der Welle 33 ist auch die Gewindespindel 19 um die Längsachse 25 drehbar. Der Antrieb 22 umfasst bevorzugt einen Elektromotor und weist beispielsweise eine Nenndrehzahl zwischen 3600 bis 4800 Umdrehungen pro Minute auf. Das Getriebe 23 ist als Riementrieb ausgebildet und weist eine drehfest auf der Welle 33 sitzende Riemenscheibe 26, eine mit der Antriebswelle 27 des Antriebs 22 drehfest verbundene Riemenscheibe 28 sowie einen Riemen 29 auf, der auf den beiden Riemenscheiben 26 und 28 sitzt. Die Welle 33 bildet hier gleichzeitig die Abtriebswelle 50 (siehe Fig. 4) des Getriebes 23. Es ist aber auch möglich, die Abtriebswelle 50 als separates Bauelement auszubilden, welches mit der Welle 33 drehfest gekoppelt ist. Das Getriebe 23 bildet bevorzugt einen synchronen Riementrieb und weist beispielsweise ein Übersetzungsverhältnis von 1:4 auf. Alternativ kann das Getriebe 23 als Kettentrieb ausgebildet sein, wobei die Riemenscheiben 26 und 28 jeweils durch ein Kettenrad und der Riemen 29 durch eine Kette ersetzt ist. Optional sitzt an der Halterung 21 ein Positionsgeber 30, der mit der Welle 33 gekoppelt ist und ein die Verdrehung der Welle 33 charakterisierendes elektrisches Signal an die Windenergieanlagensteuerung 17 abgibt oder abgeben kann.

Die Spindelmutter 18 ist nicht um die Achse 25 drehbar, insbesondere da sie über das Betätigungsglied 31 mit dem Rotorblatt 9 gekoppelt ist. Ergänzend oder alternativ kann die Spindelmutter 18 und/oder das Betätigungsglied 31 aber auch an der Halterung 21 gegen ein Verdrehen um die Achse 25 gesichert sein. Wird nun die Gewindespindel 19 um die Achse 25 gedreht, so verschiebt sich die Spindelmutter 18 zusammen mit dem Betätigungsglied 31 entlang der Achse 25, woraus eine Verdrehung des Rotorblatts 9 um die Blattachse 11 relativ zur Rotornabe 8 resultiert. Wird der Drehsinn der Gewindespindel 19 umgekehrt, so wird die Spindelmutter 18 zusammen mit dem Betätigungsglied 31 in die entgegengesetzte Richtung entlang der Achse 25 verschoben, woraus eine Verdrehung des Rotorblatts 9 um die Blattachse 11 in die entgegengesetzte Richtung resultiert. Die einander entgegengesetzten Richtungen, in welche die Spindelmutter 18 zusammen mit dem Betätigungsglied 31 entlang der Achse 25 bewegt werden kann, sind mit dem Doppelpfeil 24 angedeutet.

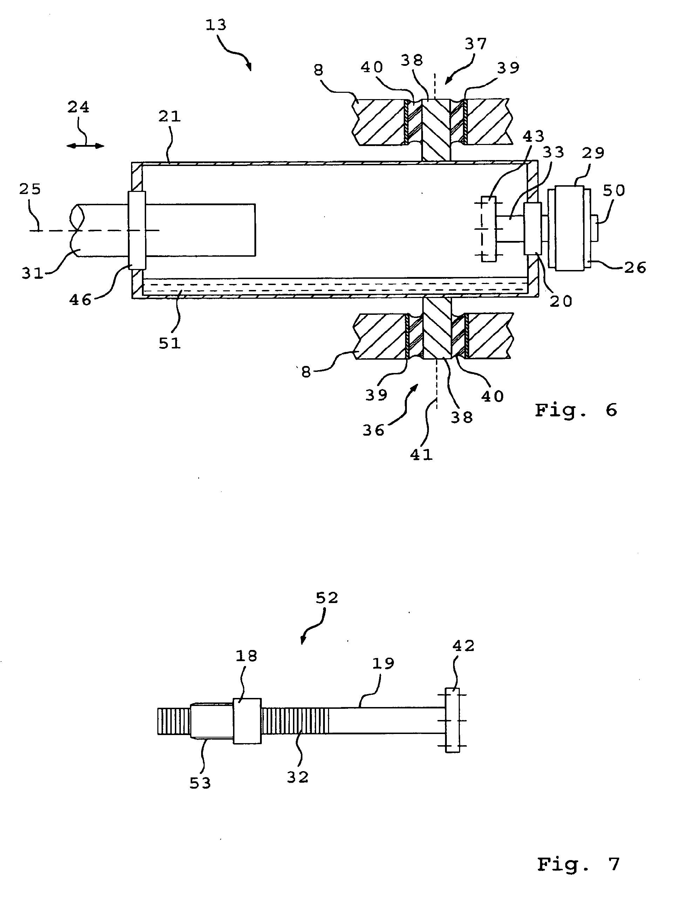

In das Gehäuse 21 ist ein flüssiges Schmiermittel 51 (siehe Fig. 6) eingebracht. Da sich bei einer Drehung des Rotors 6 um die Rotorachse 7 auch der Verstellantrieb 13 dreht, erfolgt eine automatische Schmierung der Gewindespindel 19.

Fig. 3 zeigt eine teilweise Seitenansicht des Verstellantriebs 13, wobei ersichtlich ist, dass das Betätigungsglied 31 an seinem der Spindelmutter 18 abgewandten Ende ein Anschlussstück 34 aufweist, welches mittels eines hier als Kugelgelenk ausgebildeten Gelenks 35 mit dem Rotorblatt 9 verbunden ist.

Eine teilweise geschnittene Seitenansicht des Gewindespindel-Mechanismus zeigt Fig. 4, wobei ersichtlich ist, dass die Halterung 21 durch zwei Elastomerlager 36 und 37 mit der Rotornabe 8 verbunden ist. Jedes Elastomerlager umfasst ein mit der Halterung 21 starr verbundenes Innenteil 38, eine das Innenteil 38 umringende Außenhülse 39 und einen das Innenteil 38 umgebenden und in der Außenhülse 39 angeordneten Elastomerkörper 40, mittels welchem das Innenteil 38 mit der Außenhülse 39 verbunden ist. Alternativ kann die Außenhülse entfallen, sodass der Elastomerkörper 40 direkt in einer in der Rotornabe 8 vorgesehenen Ausnehmung sitzt. Die Elastomerlager 36 und 37 ermöglichen ein Schwenken der Halterung 21 um eine Schwenkachse 41, die hier senkrecht zur Längsachse 25 und parallel zur Blattachse 11 verläuft. Zusätzlich erlauben die Elastomerlager im begrenzten Umfang gedämpfte Bewegungen in andere Richtungen, insbesondere translatorische Bewegungen und/oder Kippbewegungen. Einem Verklemmen des Verstellantriebs kann somit entgegengewirkt werden. Ferner sind Elastomerlager in der Regel wartungsarm und langlebig. Ergänzend wird darauf hingewiesen, dass auch das Gelenk 35 als Elastomerlager ausbildbar ist.

Die Gewindespindel 19 weist an ihrem der Welle 33 zugewandten Ende einen Flansch 42 auf, der mit einem an einem der Gewindespindel 19 zugewandten Ende der Welle 33 vorgesehenen Flansch 43 durch lösbare Befestigungsmittel 44 drehfest verbunden ist, die vorzugsweise als Schraubbolzen ausgebildet sind. Der Flansch 42 ist starr mit der Gewindespindel 19 und der Flansch 43 ist starr mit der Welle 33 verbunden, sodass eine Drehbewegung der Welle 33 um die Längsachse 25 auf die Gewindespindel 19 übertragbar ist. Die Gewindespindel 19 kann durch Lösen der Befestigungsmittel 44 von der Welle 33 getrennt werden.

Die Spindelmutter 18 ist in das Betätigungsglied 31 eingeschraubt und mittels eines Sicherungsstifts 45, der die Wandung des Betätigungsglieds 31 durchgreift und in ein in der Spindelmutter 18 vorgesehenes Loch eingreift, an dem Betätigungsglied 31 gesichert (siehe Fig. 5). Zum Lösen der Spindelmutter 18 von dem Betätigungsglied 31 wird der Sicherungsstift 45 entfernt oder zumindest mit der Spindelmutter 18 außer Eingriff gebracht, sodass die Spindelmutter 18 aus dem Betätigungsglied 31 herausgeschraubt werden kann. Somit ist die Spindelmutter 18 von dem Betätigungsglied 31 trennbar. Das Betätigungsglied 31 ist als Rohr ausgebildet, welches mittels einer Führung 46 in Richtung des Pfeils 24 verschiebbar an der Halterung 21 geführt ist.

In Fig. 5 ist eine teilweise Schnittansicht des Betätigungsglieds 31 entlang der Längsachse 25 gezeigt, sodass das Prinzip der Sicherung der Spindelmutter 18 an dem Betätigungsglied 31 mittels des Sicherungsstifts 45 deutlich wird. Es ist für den Fachmann klar, dass der Sicherungsstift 45 die Spindelmutter 18 grundsätzlich auch dann an dem Betätigungsglied 31 drehfest halten und axial sichern kann, wenn die Spindelmutter 18 und das Betätigungsglied 31 ohne Verschraubung zusammengesteckt sind. Ferner können mehrere Sicherungsstifte rings der Längsachse 25 vorgesehen sein.

Fig. 6 zeigt eine teilweise geschnittene Seitenansicht des Verstellantriebs 13, wobei der Sicherungsstift 45 entfernt und die Gewindespindel 19 und die Spindelmutter 18 demontiert wurden. Die demontierte Baugruppe 52 aus Gewindespindel 19 und Spindelmutter 18 ist in Fig. 7 gezeigt, wobei mit dem Bezugszeichen 53 das Außengewinde der Spindelmutter 18 bezeichnet ist, mittels welchem diese in das Betätigungsglied 31 eingeschraubt werden kann.

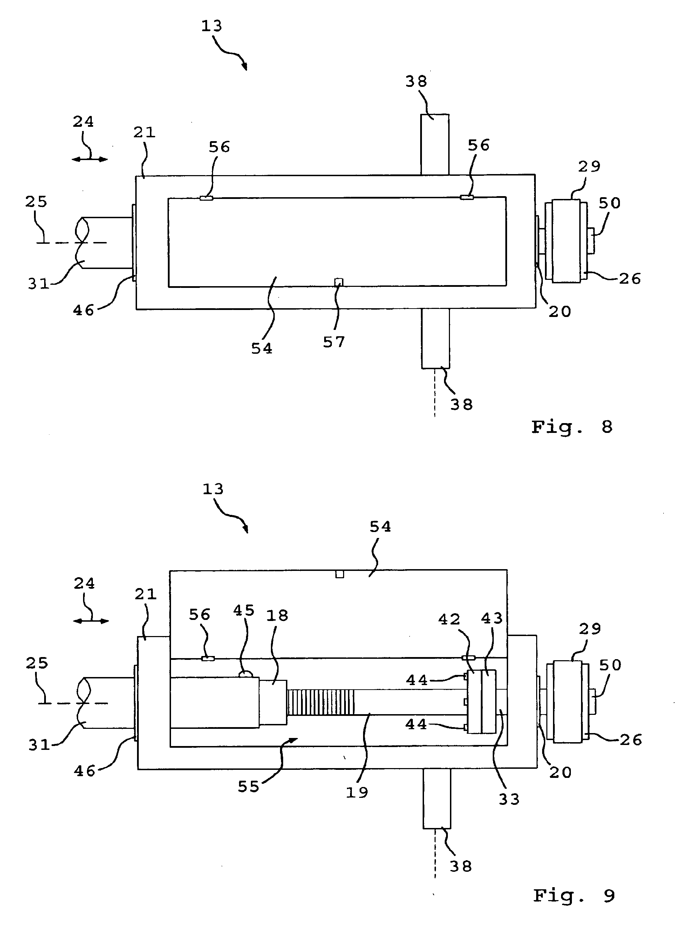

Aus Fig. 8 ist eine teilweise Seitenansicht des Verstellantriebs 13 ersichtlich, wobei eine Abdeckung 54 eine Öffnung 55 (siehe Fig. 9) des Gehäuses 21 abdeckt. Die Abdeckung 54 ist durch Scharniere 56 am Gehäuse 21 schwenkbar gelagert und somit als Klappe ausgebildet, sodass durch Schwenken der Abdeckung 54 die Gehäuseöffnung 55 freigebbar ist. Alternativ kann die Abdeckung 54 aber auch abnehmbar sein, sodass die Scharniere entfallen können. Im aus Fig. 8 ersichtlichen, geschlossenen Zustand der Abdeckung 54 verschließt diese die Öffnung 55 dichtend, sodass kein Schmiermittel 51 aus dem Gehäuse 21 austreten und keine Verunreinigungen in das Gehäuse 21 eintreten können. Ferner ist die Abdeckung 54 im geschlossenen Zustand an dem Gehäuse 21 gegen ein unbeabsichtigtes Lösen oder Aufschwenken durch eine Verriegelung 57 gesichert. In Fig. 9 ist die Verriegelung 57 gelöst und die Abdeckung 54 aufgeschwenkt, sodass die Öffnung 55 freigegeben ist. In diesem Zustand können Wartungsarbeiten am Gewindespindel-Mechanismus durchgeführt werden. Insbesondere ist durch die Öffnung 55 hindurch die Baugruppe 52 demontierbar und montierbar.

Der Verstellantrieb 14 ist entsprechend zum Verstellantrieb 13 ausgebildet.

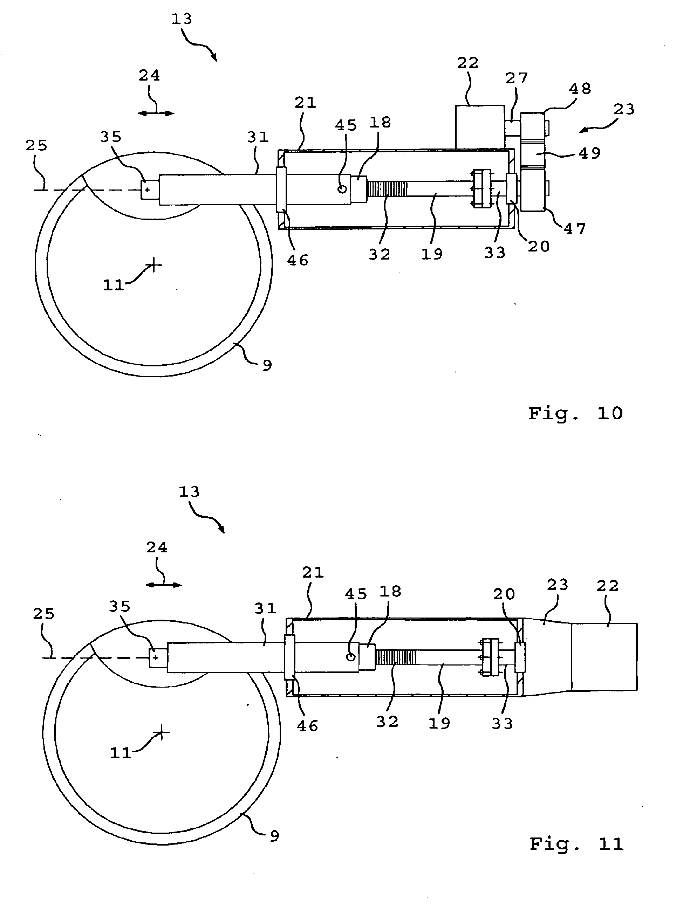

Aus Fig. 10 ist eine schematische Ansicht des aus Fig. 1 ersichtlichen und als Gewindespindel-Mechanismus ausgebildeten Verstellantriebs 13 gemäß einer zweiten Ausführungsform der Erfindung ersichtlich, wobei zu der ersten Ausführungsform identische oder ähnliche Merkmale mit denselben Bezugszeichen wie bei der ersten Ausführungsform bezeichnet sind. Im Unterschied zur ersten Ausführungsform ist das Getriebe 23 als Zahnradgetriebe ausgebildet und weist ein drehfest auf der Welle 33 sitzendes Zahnrad 47, ein mit der Antriebswelle 27 des Antriebs 22 drehfest verbundenes Zahnrad 48 sowie ein als Zahnrad ausgebildetes Zwischenrad 49 auf, welches mit den Zahnrädern 47 und 48 kämmt. Zur weiteren Beschreibung der zweiten Ausführungsform wird auf die Beschreibung der ersten Ausführungsform verwiesen. Gemäß einer Abwandlung der zweiten Ausführungsform ist es möglich, dass Zahnrad 47 direkt mit dem Zahnrad 48 zu koppeln. In diesem Fall kann das Zwischenrad 49 entfallen. Gemäß einer anderen Abwandlung der zweiten Ausführungsform ist es möglich, dass die Zahnräder 47 und 48 unter Zwischenschaltung mehrerer Zahnräder miteinander gekoppelt sind.

Aus Fig. 11 ist eine schematische Ansicht des aus Fig. 1 ersichtlichen und als Gewindespindel-Mechanismus ausgebildeten Verstellantriebs 13 gemäß einer dritten Ausführungsform der Erfindung ersichtlich, wobei zu der ersten Ausführungsform identische oder ähnliche Merkmale mit denselben Bezugszeichen wie bei der ersten Ausführungsform bezeichnet sind. Im Unterschied zur ersten Ausführungsform ist das Getriebe 23 als Planetengetriebe ausgebildet, sodass die Gewindespindel 19, die Welle 33, das Getriebe 23 und der Antrieb 22 in Richtung der Längsachse 25 hintereinander angeordnet sind. Räumlich ergibt sich somit eine sehr schlanke Ausbildung des Verstellantriebs 13. Das Planetengetriebe ist vorzugsweise einstufig. Zur weiteren Beschreibung der dritten Ausführungsform wird auf die Beschreibung der ersten Ausführungsform verwiesen.

### Bezugszeichenliste

- 1: Windenergieanlage
- 2: Fundament
- 3: Turm
- 4: Maschinenhaus
- 5: Maschinenträger
- 6: Rotor
- 7: Rotorachse
- 8: Rotornabe
- 9: Rotorblatt
- 10: Rotorblatt
- 11: Blattachse
- 12: Blattachse
- 13: Verstellantrieb
- 14: Verstallantrieb
- 15: Wind
- 16: Generator
- 17: Windenergieanlagensteuerung
- 18: Spindelmutter
- 19: Gewindespindel
- 20: Lager / Wälzlager
- 21: Halterung
- 22: elektrischer Antrieb
- 23: Getriebe
- 24: Bewegungsrichtung der Spindelmutter und des Betätigungsglieds
- 25: Längsachse / Drehachse der Welle und der Gewindespindel
- 26: Riemenscheibe / Kettenrad
- 27: Welle des Antriebs
- 28: Riemenscheibe / Kettenrad
- 29: Riemen / Kette
- 30: Positionsgeber
- 31: Betätigungsglied
- 32: Außengewinde der Gewindespindel
- 33: Welle
- 34: Anschlussstück des Betätigungsglieds
- 35: Gelenk
- 36: Elastomerlager
- 37: Elastomerlager
- 38: Innenteil
- 39: Außenhülse
- 40: Elastomerkörper
- 41: Schwenkachse
- 42: Flansch
- 43: Flansch
- 44: Befestigungsmittel / Schraubbolzen
- 45: Sicherungsstift
- 46: Führung
- 47: Zahnrad
- 48: Zahnrad
- 49: Zwischenrad
- 50: Abtriebswelle des Getriebes
- 51: Schmiermittel
- 52: Baugruppe aus Gewindespindel und Spindelmutter
- 53: Außengewinde der Spindelmutter
- 54: Abdeckung
- 55: Gehäuseöffnung
- 56: Scharnier
- 57: Verriegelung

## Patentansprüche

1. Rotor für eine Windenergieanlage (1), mit einer Rotornabe (8), wenigstens einem an der Rotornabe (8) um eine Blattachse (11) drehbar gelagerten Rotorblatt (9), wenigstens einem Gewindespindel-Mechanismus (13), der zwischen die Rotornabe (8) und das Rotorblatt (9) geschaltet und sowohl mit der Rotornabe (8) als auch mit dem Rotorblatt (9) verbunden ist, wobei das Rotorblatt (9) durch Betätigen des Gewindespindel-Mechanismus (13) relativ zu der Rotornabe (8) um die Blattachse (11) gedreht wird oder werden kann,
**dadurch gekennzeichnet, dass**
der Gewindespindel-Mechanismus (13) einen Antrieb (22), ein Betätigungsglied (31), eine lösbar mit dem Betätigungsglied (31) gekoppelte Spindelmutter (18) und eine mittels des Antriebs (22) um ihre Längsachse (25) drehbare Gewindespindel (19) aufweist, die lösbar mit dem Antrieb (22) gekoppelt ist, sodass die Gewindespindel (19) und die Spindelmutter (18) von dem Gewindespindel-Mechanismus (13) trennbar sind.

2. Rotor nach Anspruch 1,
**dadurch gekennzeichnet, dass**
die Gewindespindel (19) durch wenigstens ein Befestigungsmittel (44) lösbar an einer Welle (33) befestigt ist, die mittels des Antriebs (22) drehbar ist.

3. Rotor nach Anspruch 2,
**dadurch gekennzeichnet, dass**
die Spindelmutter (18) auf die Gewindespindel (19) aufgeschraubt ist und zusammen mit der Gewindespindel (19) eine Baugruppe (52) bildet, die zwischen die Welle (33) und das Betätigungsglied (31) geschaltet ist.

4. Rotor nach Anspruch 3,
**dadurch gekennzeichnet, dass**
das Rotorblatt (9) und die Rotornabe (8) jeweils ein Bauteil bilden, wobei das Betätigungsglied (31) an einem ersten der Bauteile (9) gelagert ist und die Welle (33) an einem zweiten der Bauteile (8) um ihre Längsachse (25) drehbar gelagert ist.

5. Rotor nach Anspruch 4,
**dadurch gekennzeichnet, dass**
die Welle (33) mittels einer Halterung (21) an dem zweiten Bauteil (8) gelagert ist.

6. Rotor nach Anspruch 5,
**dadurch gekennzeichnet, dass**
die Halterung (21) als Gehäuse ausgebildet ist, in welchem die Welle (33), die Gewindespindel (19), die Spindelmutter (18) und das Betätigungsglied (31) angeordnet sind, welches verschiebbar am Gehäuse geführt ist und sich aus diesem heraus erstreckt.

7. Rotor nach Anspruch 6,
**dadurch gekennzeichnet, dass**
das Gehäuse (21) eine durch eine Abdeckung (54) abgedeckte Zugangsöffnung (55) aufweist, die durch Öffnen der Abdeckung (54) freigebbar ist, sodass durch die Zugangsöffnung (55) hindurch die Gewindespindel (19) und die Spindelmutter (18) zugänglich sind.

8. Rotor nach Anspruch 6 oder 7,
**dadurch gekennzeichnet, dass**
in das Gehäuse (21) ein Schmiermittel (51) eingebracht ist, sodass bei einer Drehung des Rotors (6) um eine Rotorachse (7) eine automatische Schmierung der Gewindespindel (19) erfolgt.

9. Rotor nach einem der Ansprüche 5 bis 8,
**dadurch gekennzeichnet, dass**
die Welle (33) mittels der Halterung (21) gelenkig an dem zweiten Bauteil (8) gelagert ist.

10. Rotor nach einem der Ansprüche 5 bis 9,
**dadurch gekennzeichnet, dass**
die Halterung (21) mittels wenigstens eines Elastomerlagers (36) gelenkig an dem zweiten Bauteil (8) gelagert ist.

11. Rotor nach Anspruch 10,
**dadurch gekennzeichnet, dass**
das Elastomerlager (36) ein Innenteil (38), ein das Innenteil (38) umringendes Außenteil (39) und einen das Innenteil (38) umgebenden und in dem Außenteil (39) sitzenden Elastomerkörper (40) aufweist, mittels welchem das Innenteil (38) mit dem Außenteil (39) verbunden ist.

12. Rotor nach Anspruch 11,
**dadurch gekennzeichnet, dass**
das Innenteil (38) fest mit der Halterung (21) und das Außenteil (39) fest mit dem zweiten Bauteil (8) verbunden ist.

13. Rotor nach einem der Ansprüche 5 bis 12,
**dadurch gekennzeichnet, dass**
das Betätigungsglied (31) gelenkig an dem ersten Bauteil (9) gelagert ist.

14. Rotor nach einem der Ansprüche 5 bis 13,
**dadurch gekennzeichnet, dass**
die Spindelmutter (18) an dem Betätigungsglied (31) mittels einer Schraubverbindung befestigt ist, die mittels eines Sicherungsstifts (45) gegen Lösen gesichert ist.

15. Rotor nach einem der Ansprüche 5 oder 14,
**dadurch gekennzeichnet, dass**
die Welle (33) unter Zwischenschaltung eines Getriebes (23) mit dem Antrieb (22) gekoppelt ist.

## Claims

1. Rotor for a wind turbine (1), with a rotor hub (8), having at least one rotor blade (9) mounted on the rotor hub (8) so as to be rotatable about a blade axis (11), and at least one threaded spindle mechanism (13), which is positioned between the rotor hub (8) and the rotor blade (9) and is connected both to the rotor hub (8) and to the rotor blade (9), wherein the rotor blade (9) is or can be rotated relative to the rotor hub (8) about the blade axis (11) by actuating the threaded spindle mechanism (13),
**characterized in that** the threaded spindle mechanism (13) has a drive (22), an actuating element (31), a spindle nut (18) detachably coupled to the actuating element (31), and a threaded spindle (19) which can be rotated about the longitudinal axis (25) thereof by means of the drive (22), and which is detachably coupled to the drive (22), such that the threaded spindle (19) and the spindle nut (18) can be separated from the threaded spindle mechanism (13).

2. The rotor according o claim 1, **characterised in that** the threaded spindle (19) is detachably secured by at least one securing means (44) to a shaft (33) which is rotatable by means of the drive (22).

3. The rotor according to claim 2, **characterised in that** the spindle nut (18) is screwed onto the threaded spindle (19) and, together with the threaded spindle (19), forms an assembly (52), which is positioned between the shaft (33) and the actuating element (31).

4. The rotor according to claim 3, **characterised in that** the rotor blade (9) and the rotor hub (8) each form a component, wherein the actuating element (31) is mounted on one of the first components (9) and the shaft (33) is rotatably mounted on another component (8) about the longitudinal (25) axis thereof.

5. The rotor according to claim 4, **characterised in that** the shaft (33) is mounted on the second component (8) by means of a support (21).

6. The rotor according to claim 5, **characterised in that** the support (21) is formed as a housing, in which the shaft (33), the threaded spindle (19), the spindle nut (18) and the actuating element (31) are arranged, and which is movably guided on the housing and protrudes therefrom.

7. The rotor according to claim 6, **characterised in that** the housing (21) has an access opening (55) covered by a cover (54), which is releasable by opening the cover (54) such that the threaded spindle (19) and the spindle nut (18) are accessible through the access opening (55).

8. The rotor according to claim 6 or 7, **characterised in that** a lubricant (51) is introduced in the housing (21), so that when the rotor (6) rotates about an axis of rotation (7), an automatic lubrication of the threaded spindle (19) takes place.

9. The rotor according to one of the claims 5 to 8, **characterised in that** the shaft (33) is mounted in an articulated manner on the second component (8) by the support (21).

10. The rotor according to one of the claims 5 to 9, **characterised in that** the shaft (21) is mounted by at least one elastomer bearing (36) on the second component (8) in an articulated manner.

11. The rotor according to claim 10, **characterised in that** the elastomer bearing (36) comprises an inner part (38), an outer part (39) surrounding the inner part (38) and an elastomer body (40) sitting within the outer part, by means of which the inner part (38) is connected to the outer part (39).

12. The rotor according to claim 11, **characterised in that** the inner part (38) has a fixed connection with the support (21) and the outer part (39) has a fixed connection with the second component (8).

13. The rotor according to one of the claims 5 to 12, **characterised in that** the actuating element (31) is mounted on the first component (9) in an articulated manner.

14. The rotor according to one of the claims 5 to 13, **characterised in that** the spindle nut (18) is affixed to the actuating element (31) by means of a threaded connection which is prevented from detaching by means of a locking pin (45).

15. The rotor according to one of the claims 5 to 14, **characterised in that** the shaft (33) is coupled with the drive (23) by means of an interposed gear mechanism (23).

## Revendications

1. Rotor destiné à une installation d'énergie éolienne (1), comportant un moyeu de rotor (8), au moins une pale de rotor (9) montée, de façon à pouvoir tourner, sur le moyeu de rotor (8) autour d'un axe de pale (11), au moins un mécanisme de broche filetée (13) monté entre le moyeu de rotor (8) et la pale de rotor (9) et relié tant au moyeu de rotor (8) qu'à la pale de rotor (9), la pale de rotor (9) pivotant ou pouvant pivoter sous l'effet de l'actionnement du mécanisme de broche filetée (13) relativement au moyeu de rotor (8) autour de l'axe de pale (11), **caractérisé en ce que**
le mécanisme de broche filetée (13) présente un dispositif d'entraînement (22), un actionneur (31), un écrou de broche (18) couplé avec l'actionneur (31) et desserrable ainsi qu'une broche filetée (19) pivotant autour de son axe longitudinal (25) au moyen du dispositif d'entraînement (22), cette broche étant couplée avec le dispositif d'entraînement (22) et desserrable, de telle sorte que la broche filetée (19) et l'écrou de broche (18) puissent être séparés du mécanisme de la broche filetée (13).

2. Rotor selon la Revendication 1, **caractérisé en ce que** la broche filetée (19) est fixée par au moins un élément de fixation (44) à un arbre (33) qui peut pivoter sous l'action du dispositif d'entraînement (22).

3. Rotor selon la Revendication 2, **caractérisé en ce que** l'écrou de broche (18) est vissé sur la broche filetée (19) et forme, avec la broche filetée (19), un module (52) qui est monté entre l'arbre (33) et l'actionneur (31).

4. Rotor selon la revendication 3, **caractérisé en ce que** la pale de rotor (9) et le moyeu de rotor (8) forment respectivement un composant, l'actionneur (31) étant logé sur un premier composant (9) et l'arbre (33) étant logé sur un deuxième composant (8) de façon à pouvoir tourner autour de son axe longitudinal (25).

5. Rotor selon la revendication 4, **caractérisé en ce que** l'arbre (33) est monté sur le deuxième composant (8) au moyen d'un support (21).

6. Rotor selon la revendication 5, **caractérisé en ce que** le support (21) est réalisé sous la forme d'un boîtier dans lequel l'arbre (33), la broche filetée (19), l'écrou de broche (18) et l'actionneur (31) sont mis en place, l'actionneur coulissant sur le boîtier et s'étendant hors de celui-ci.

7. Rotor selon la revendication 6, **caractérisé en ce que** le boîtier (21) présente une ouverture d'accès (55) recouverte par un élément de recouvrement (54) et pouvant être libérée par l'ouverture de l'élément de recouvrement (54) de telle sorte que la broche filetée (19) et l'écrou de broche (18) soient accessibles par l'ouverture d'accès (55).

8. Rotor selon la revendication 6 ou 7 **caractérisé en ce que** le boîtier (21) comporte un lubrifiant (51) de telle sorte qu'une lubrification automatique de la broche filetée (19) soit assurée lors d'une rotation du rotor (6) autour d'un axe de rotor (7).

9. Rotor selon l'une des revendications 5 à 8 **caractérisé en ce que** l'arbre (33) est logé sur le deuxième composant (8) au moyen du support (21) et articulé grâce à celui-ci.

10. Rotor selon l'une des revendications 5 à 9 **caractérisé en ce que** le support (21) est logé sur le deuxième composant (8) au moyen d'au moins un palier en élastomère (36) et articulé grâce à celui-ci/ceux-ci.

11. Rotor selon la revendication 10, **caractérisé en ce que** le palier en élastomère (36) présente une partie intérieure (38), une partie extérieure (39) entourant la partie intérieure (38) et un corps en élastomère (40) entourant la partie intérieure (38), logé dans la partie extérieure (39) et au moyen duquel la partie intérieure (38) est reliée à la partie extérieure (39).

12. Rotor selon la revendication 11, **caractérisé en ce que** la partie intérieure (38) est solidement reliée au support (21) et la partie extérieure (39) est solidement reliée au deuxième composant (8).

13. Rotor selon l'une des revendications 5 à 12 **caractérisé en ce que** l'actionneur (31) est logé sur le premier composant (9) et est ainsi articulé.

14. Rotor selon l'une des revendications 5 à 13 **caractérisé en ce que** l'écrou de broche (18) est fixé à l'actionneur (31) au moyen d'un raccord à vis dont le desserrage est prévenu par une goupille de sécurité (45).

15. Rotor selon l'une des revendications 5 ou 14 **caractérisé en ce que** l'arbre (33) est accouplé avec le dispositif d'entraînement (22) grâce à un engrenage intercalé (23).
